Europäisches Patentamt

European Patent Office

Office européen des brevets

(11) Publication number: **0 112 665**
A1

# EUROPEAN PATENT APPLICATION

(21) Application number: 83307370.3

(22) Date of filing: 05.12.83

(51) Int. Cl.³: **B 60 R 1/08**

(30) Priority: 23.12.82 GB 8236712

(43) Date of publication of application: 04.07.84
Bulletin 84/27

(84) Designated Contracting States: **DE FR GB IT**

(71) Applicant: **BRITAX (WINGARD) LIMITED, Chandler
Road, Chichester Sussex, PO19 2UG (GB)**

(72) Inventor: **Sargeant, Archibald, 6 Watertower Buidling
London Road, Bognor Regis Sussex PO21 1EP (GB)**

(74) Representative: **Hollinghurst, Antony, Britax Central
Services 40 Granby Avenue, Garretts Green
Birmingham, B33 OSJ (GB)**

(54) **Rear view mirror assembly.**

(57) A rear view mirror assembly for a vehicle comprises a case
(10), adapted to be secured to the body of a vehicle, and a mirror
carrier (20) supporting a reflective member (16) and capable of
being tilted with respect to the case (10) into each of two
alternative stable positions. The mirror carrier (20) is held in each
of its stable positions by a permanent magnet (38) which engages
with a first element (42) of ferromagnetic material when the mirror
carrier (20) is in its first position and with a second element (44) of
ferromagnetic material when the mirror carrier (20) is in its second
position.

"Rear View Mirror Assembly"

This invention relates to a rear view mirror assembly for a vehicle of the type in which a mirror carrier, carrying a mirror glass, is capable of being tilted into each of the two alternative stable positions by means of a lever. The two positions form a normal and an anti-dazzle position.

The invention is particularly concerned with a rear view mirror assembly of this type in which a mounting element is adapted to be secured to the body of the vehicle and a mirror carrier, supporting a reflective member, is capable of being tilted with respect to the mounting element into each of two stable positions. Such a mirror assembly is disclosed in Patent Specification GB-A-1187170, in which the mirror carrier takes the form of a frame or housing which is biased resiliently towards its stable positions substantially solely by the resilience of the material of the frame or housing itself. Consequently, the entire frame or housing has to be formed of a material of sufficient resilience for the required bias to be achieved.

According to the present invention, a rear view mirror assembly for a vehicle comprises a mounting element adapted to be secured to the body of a vehicle and a mirror carrier supporting a reflective member and capable of being tilted with respect to the mounting element into each of two alternative stable positions, the mirror carrier being held in each of its stable positions by a permanent magnet which engages with a first element of ferromagnetic material when the mirror carrier is in its first position and with a second element of ferromagnetic material when the mirror carrier is in its second position.

In one form of the invention, the permanent magnet is rectangular, having its pole faces on opposite ends and the two elements of ferromagnetic material comprise two limbs of a U-shaped keeper.

The mounting element may comprise a case for the mirror assembly, the mirror carrier being pivotally mounted on the interior of the case at an end remote from the permanent magnet. An

- 2 -

0112665

operating lever, attached to the mirror carrier adjacent to the permanent magnet may project throught a slot in a case.

Either the permanent magnet may be secured to the mounting element and the two elements of ferromagnetic material to the mirror carrier or _vice versa_.

If it is desired to provide electrically operable means for moving the mirror between each of its two stable positons, the two elements of ferromagnetic material may comprise pole faces of the core of a solenoid, the core being formed of a soft magnetic material so as to have minimum remanence. When it is desired to move the mirror from one stable position to the other, the solenoid is energised by an electrical pulse of polarity such that the resulting magnetic pole on each of the two elements of ferromagnetic material is of the same polarity as that of the confronting pole face of the permanent magnetic with the result that the permanent magnetic is repelled. The duration of the pulse is less than the time taken for the mirror to reach a position midway between its two stable positions, the inertia of the mirror carrying it over into its other stable position as the magnetic field from the solenoid decays. In order to avoid any risk of the mirror returning to its original position when the magnetic field from the solenoid decays, the energising circuit of the solenoid may include contacts on the mirror and the mirror carrier respectively so that a second pulse is applied if the mirror does return to its original position. A second set of contacts is, of course, provided for the other stable position.

An embodiment of the invention will now be described, by way of example, with reference to the accompanying drawings, in which:

Figure 1 is a front view of an interior mirror for a motor vehicle in accordance with the invention;

Figure 2 is a cross-sectional view taken on the line 2 - 2 in Figure 1; and

Figures 3 and 4 are cross-sectional views, similar to Figure 2, of second and third embodiments of the invention respectively.

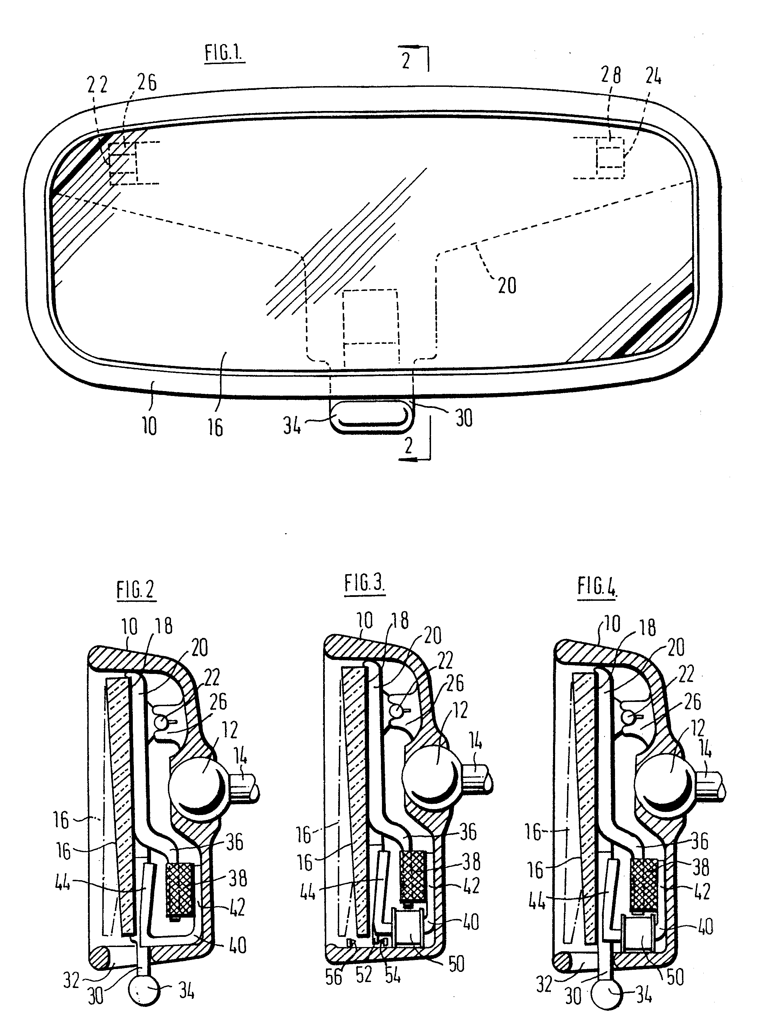

Referring to Figures 1 and 2, an interior rear view mirror for a motor car comprises a plastics case 10, having a socket formed in its back which engages with a ball 12 so as to form an adjustable joint. The ball 12 is mounted on a stem 14 which is secured to the body of the vehicle (not shown).

Within the housing 10, a reflective member 16, in the form of a prism with a layer of silvering 18 on its second surface, is mounted on a carrier 20. Adjacent to its top corners the carrier 20 has two rearwardly extending projections carrying cylindrical formations 22 and 24 which are a snap-fit in complementary sockets 26 and 28 formed in projections extending inwardly from the back of the case 10. The carrier 20 is pivotable about the axis of these cylindrical formations 22 and 24 which is generally horizontal.

The bottom of the carrier 20 takes the form of a lever 30 which projects through a slot 32 in the bottom edge of the case 10 and has a manually operable knob 34 on its free end. A portion 36 of the carrier 20 adjacent to the lever 30 is pressed rearwardly out of the plane of the rest of the carrier and has a sintered magnet 38 mounted thereon with its pole faces confronting the back of the case and the back of the reflective member 16 respectively. A U-shaped steel keeper 40 is secured to the interior of the bottom of the case with its side limbs confronting the two pole faces of the magnet 38. When the reflective member 16 is in the position shown in solid lines in Figure 2, the rearwardly directed pole face of the magnet 38 is in engagement with the rear limb 42 of the U-shaped member 40 and is retained there by magnetic attraction. If the knob 34 is moved forwardly, the forwardly directed pole face of the magnet 38 comes into contact with the front limb 44 of the U-shaped member 40 and is retained there by magnetic attraction, the reflective member 16 then being in the position illustrated in chain-dotted lines in Figure 2 and having its first surface parallel to the position previously occupied by its second surface.

Figure 3 illustrates an alternative embodiment of the invention in which the reflective member 16 can be moved between each of its two stable positions electrically. Such electrical operation is required if the mirror is to be arranged to pivot automatically to an anti-glare position in response to glare from the headlights of a following vehicle. Most of the components of

- 4 -                                                    0112665

the mirror illustrated in Figure 3 are the same as the corresponding components of Figures 1 and 2 and are denoted by the same reference numerals. However the lever 30, together with the slot 32 through which it projects, are omitted.

The U-shaped keeper 40 is formed of a soft magnetic material and has a solenoid 50 thereon. An electrical contact blade 52 is mounted on the bottom of the carrier 20 and makes electrical connection with a first fixed contact 54 when the carrier is in one stable position and with another fixed contact 56 when the carrier 20 is in the other stable position.

When the reflective member is to be moved to the position illustrated in Figure 3, in which the contact blade 52 makes conection with the fixed contact 54, to the position shown in chain-dotted lines. An electrical signal is applied to the solenoid 50 via the contacts 52 and 54, the direction of the electric current being such that the magnetic pole formed on the limb 42 repels the magnet 38. The magnet 38 is, of course, also repelled by the magnetic pole formed on the other limb 44 but, in view of the air gap, this force of repulsion is much lower. Consequently the reflective member 16 starts to move forwardly. As soon as the contacts 52 and 54 break, the magnetic field produced by the solenoid 50 starts to decay, but the inertia of the reflective member 16 causes it to continue to move forwardly. By the time the reflective member 16 has passed the half-way position between its two stable positions, the magnetic field produced by the solenoid 50 has decayed to a value lower than that of the magnetic field produced by the permanent magnet 38, with the result that the latter atracts the limb 44 and the reflective member 16 is held in its new stable position.

When the reflective member 16 is to be returned to its original position, the solenoid 50 is energised via the contacts 52 and 56. The direction of the energising current in the solenoid 50 is the same, regardless of the required direction of movement of the reflective member 16.

Figure 4 illustrates a further embodiment of the invention has an operating lever 30 as well as a solenoid 50 so that the reflective member 16 can be moved between its stable states either manually or electrically. No contacts equivalent to the contacts 52, 54 and 56 are provided, the duration of the pulse supplied to the solenoid 50 being determined by a separate electronic circuit. Although there is a risk that the reflective member may fail to move to its other stable position in response to such a pulse, the resulting error can readily be corrected manually. Of course, the embodiment illustrated in Figure 4 may be provided with contacts 52, 54 and 56 if desired.

In either of the embodiments shown in Figures 3 and 4, a thin plate of non-magnetic material (not shown) may be provided on each of the pole faces of the permanent magnet 38, or on the corresponding faces of the liombs 42 and 44 of the U-shaped member 40, in order to reduce the holding force produced by the permament magnet 38 to a particular required value.

In the foregoing description, the terms "front" and "forwardly" refer to the side from which the mirror is viewed and the terms "back" and "rearwardly" refer to the opposite side thereof. These terms do not refer to the front and back of the vehicle in which the mirror is installed.

- 6 -

0112665

CLAIMS

1. A rear view mirror assembly for a vehicle comprising a mounting element (10) adapted to be secured to the body of a vehicle and a mirror carrier (20) supporting a reflective member (16) and capable of being tilted with respect to the mounting element (10) into each of two alternative stable positions, characterised in that the mirror carrier (10) is held in each of its stable positions by a permanent magnet (38) which engages with a first element (42) of ferromagnetic material when the mirror carrier (20) is in its first position and with a second element (44) of ferromagnetic material when the mirror carrier (20) is in its second position.

2. A rear view mirror assembly according to claim 1, characterised in that the permanent (38) magnet is rectangular, with its pole faces on opposite ends, and the two elements (42, 44) of ferromagnetic material comprise two limbs of a U-shaped keeper (40).

3. A rear view mirror assembly according to claim 1 or 2, characterised in that the mounting element comprises a case (10) for the mirror assembly, the mirror carrier (20) being pivotally mounted on the interior of the case (10) at an end remote from the permanent magnet (38).

4. A rear view mirror assembly according to claim 3, characterised in that an operating lever (30) is attached to the mirror carrier (20) adjacent to the permanent magnet (38) and projects through a slot in the case (10).

5. A rear view mirror assembly according to any preceding claim, characterised in that the permanent magnet (38) is secured to the mounting element (10) and the two elements (42, 44) of ferromagnetic material to the mirror carrier (20).

6. A rear view mirror assembly according to any of claims 1 to 4, characterised in that the permanent magnet (38) is secured to the mirror carrier (20) and the two elements (42, 44) of ferromagnetic material to the mounting element (10).

7. A rear view mirror assembly according to any preceding claim, characterised in that the two elements (42, 44) of ferromagnetic material comprise pole faces of the core (40) of a

0112665

solenoid (50), the core (40) being formed of a soft magnetic material.

8.    A rear view mirror assembly according to any preceding claim, characterised in that the energising circuit  of the solenoid (50) includes  contacts  (52, 54, 56) on the mirror carrier (20) and the mounting element (10) respectively.

0112665

FIG.1.

FIG.2    FIG.3.    FIG.4.

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 669 159 (ROGERS) <br> * Claim 1; figure 6 * | 1-5 | B 60 R 1/08 |
| X | US-A-4 281 898 (MURAKAMI KAIMEIDO) <br> * Figures 1,5,19; claims 1,2 * | 1-4,6, 7 | |
| X | FR-A-2 077 300 (COMBINED OPTICAL INDUSTRIES) <br> * Figure 1; claims 1,3 * | 1,4 | |
| X | FR-A-2 087 857 (GRELL) <br> * Claims 1-5 * | 1,7 | |
| A | FR-A-2 334 145 (PEUGEOT) <br> * Claims 1,3,4 * | 1,7,8 | |

TECHNICAL FIELDS SEARCHED (Int. Cl. ³)

B 60 R 1/08

The present search report has been drawn up for all claims

| Place of search | Date of completion of the search | Examiner |
|---|---|---|
| THE HAGUE | 08-03-1984 | SCHMITTER J.M. |